# EUROPÄISCHE PATENTSCHRIFT

(11) **EP 3 207 694 B1**
(45) Veröffentlichungstag und Bekanntmachung des Hinweises auf die Patenterteilung: **13.09.2023**
(21) Anmeldenummer: 15784603.1
(22) Anmeldetag: 15.10.2015
(51) Int. Cl.: H04N 1/60, H04N 9/64

(54) **VERFAHREN ZUM BETREIBEN EINER ANZEIGEVORRICHTUNG, ANORDNUNG UND KRAFTFAHRZEUG**
METHOD FOR OPERATING A DISPLAY DEVICE, ARRANGEMENT, AND MOTOR VEHICLE
PROCÉDÉ DE FONCTIONNEMENT D'UN DISPOSITIF D'AFFICHAGE, ENSEMBLE ET VÉHICULE AUTOMOBILE

(30) Priorität: 16.10.2014 DE 102014221057
(43) Veröffentlichungstag der Anmeldung: 23.08.2017
(73) Patentinhaber: Continental Automotive Technologies GmbH, 30165 Hannover (DE)
(72) Erfinder: LAHR, Torsten, 55270 Zornheim (DE); WEBER, Markus, 55129 Mainz (DE); BRANDL, Tobias, 93049 Regensburg (DE)
(74) Vertreter: Continental Corporation
(86) Internationale Anmeldenummer: PCT/EP2015/073881
(87) Internationale Veröffentlichungsnummer: WO 2016/059156

(56) Entgegenhaltungen:
- WO-A1-2013/008282
- CN-A- 1 845 232
- DE-A1- 10 355 462
- US-A1- 2008 101 695
- US-A1- 2010 302 439
- US-A1- 2011 157 212
- GRANT WALLACE ET AL: "Color gamut matching for tiled display walls", PROCEEDINGS OF THE WORKSHOP ON VIRTUAL ENVIRONMENTS 2003 , EGVE '03, 1. Januar 2003 (2003-01-01), Seiten 293-302, XP055239126, New York, New York, USA DOI: 10.1145/769953.769988 ISBN: 978-3-905673-00-5
- PING HE ET AL: "Investigation on Color Shifts for Different Gamma of Display System in CIECAM02-Based Uniform Color Space", COMPUTER SCIENCE AND SOFTWARE ENGINEERING, 2008 INTERNATIONAL CONFERENCE ON, IEEE, PISCATAWAY, NJ, USA, 12. Dezember 2008 (2008-12-12), Seiten 30-33, XP031378290, ISBN: 978-0-7695-3336-0

## Beschreibung

Die vorliegende Erfindung betrifft ein Verfahren zum Betreiben einer Anzeigevorrichtung und einer weiteren Anzeigevorrichtung, insbesondere in einem Kraftfahrzeug. Die Erfindung betrifft weiterhin eine Anordnung, die zum Durchführen des Verfahrens ausgebildet ist, sowie ein Kraftfahrzeug, das die Anordnung aufweist.

Anzeigevorrichtungen, insbesondere Bildschirme (sogenannte Displays), können bei einem gleichen Eingangssignal leicht unterschiedliche Farben darstellen. Beispielsweise in Kraftfahrzeugen können mehrere Anzeigevorrichtungen vorgesehen sein, die meist recht nahe zueinander eingebaut sind. Daher können im Kraftfahrzeug für einen Nutzer auch schon leichte farbliche Differenzen als störend wirken.

Aus der US 2011/0157212 A1 ist ein Verfahren zum Betreiben einer Anzeigevorrichtung bekannt mit Bereitstellen eines Eingangssignals, das mindestens einen RGB-Wert umfasst, Bereitstellen eines Gammawertes der Anzeigevorrichtung, Bereitstellen einer Abgleichsmatrix, die den Farbraum der Anzeigevorrichtung auf den ermittelten Zielfarbraum abbildet, Normieren des RGB-Werts in Abhängigkeit von dem Gammawert, Multiplizieren des normierten RGB-Werts mit der Abgleichsmatrix und dadurch Ermitteln eines Ausgangswertes, Rücktransformieren des Ausgangswertes in Abhängigkeit von dem Gammawert und dadurch Ermitteln eines korrigierten RGB-Werts, und Bereitstellen eines Ausgangssignals für die Anzeigevorrichtung, das den korrigierten RGB-Wert umfasst. Aus der Publikation "Color Gamut Matching for Tiled Display Walls" von Grant Wallace et al. ist es bekannt, einen Zielfarbraum als Schnittmenge mehrerer Anzeigevorrichtungen zu definieren. Aus der US 2008/0101695 A1 ist ein Verfahren zur Farbwiedergabekorrektur bekannt. Aus der DE 103 55 462 A1 ist ein optisches Anzeigesystem für ein Fahrzeug bekannt. Die Publikation "Investigation on Color Shifts for Different Gamma of Display System in CIECAM02-Based Uniform Color Space" von Ping He et al. untersucht Farbverschiebungen bei unterschiedlichen Gamma-Werten. Die US 8,860,745 B2 betrifft Farbgamutanpassungen. Die WO 2013/008282 A1 betrifft Blickwinkelkorrektur, die CN 1845232 A betrifft Farbtemperaturkorrekturen.

Es ist wünschenswert, ein Verfahren zum Betreiben einer Anzeigevorrichtung und einer weiteren Anzeigevorrichtung anzugeben, das ein verlässliches Betreiben der Anzeigevorrichtungen ermöglicht. Insbesondere ist es Aufgabe der Erfindung, anzugeben, wie die Anzeigevorrichtungen temperaturunabhängig die gleichen Farben darstellen. Zudem ist es wünschenswert, eine Anordnung anzugeben, die dazu ausgebildet ist, das Verfahren auszuführen sowie ein Kraftfahrzeug, das eine derartige Anordnung aufweist.

Eine erfindungsgemäße Lösung dazu ist in Anspruch 1, sowie in Anspruch 4 und 5 angegeben. Erfindungsgemäß wird für beide Anzeigevorrichtungen eine Umgebungstemperatur ermittelt, und in Abhängigkeit von der Umgebungstemperatur ein weiterer Korrekturwert, der Temperatur-Korrekturwert, bereitgestellt und angewendet.

Gemäß zumindest einer Ausführungsform der Erfindung umfasst ein Verfahren zum Betreiben einer Anzeigevorrichtung und einer weiteren Anzeigevorrichtung ein Bereitstellen je eines Eingangssignals für die Anzeigevorrichtungen, das mindestens einen RGB-Wert umfasst. Ein Gammawert der jeweiligen Anzeigevorrichtung wird bereitgestellt. Eine Abgleichmatrix der jeweiligen Anzeigevorrichtung wird bereitgestellt. Der RGB-Wert wird in Abhängigkeit von dem Gammawert normiert. Der normierte RGB-Wert wird mit der Abgleichsmatrix multipliziert und dadurch ein Ausgangswert ermittelt. Der Ausgangswert wird in Abhängigkeit von dem Gammawert rücktransformiert und dadurch wird ein korrigierter RGB-Wert ermittelt. Ein Ausgangssignal für die jeweilige Anzeigevorrichtung wird bereitgestellt, das den korrigierten RGB-Wert umfasst.

Das Eingangssignal wird somit unter Berücksichtigung des Gammawerts der jeweiligen Anzeigevorrichtung korrigiert. Somit ergibt sich insbesondere auch bei der Darstellung von Kombinationen der Grundfarben (Rot, Grün, Blau) auf unterschiedlichen Anzeigevorrichtungen die gleiche Farbe oder zumindest eine sehr ähnliche Farbe innerhalb von engen Toleranzen.

Das Eingangssignal, das den mindestens einen RGB-Wert umfasst, ist insbesondere ein Signal zur Übertragung von Farbvideosignalen. Die drei Grundfarben Rot, Grün und Blau werden jeweils einzeln übertragen. Der Gammawert der jeweiligen Anzeigevorrichtung steht insbesondere für die exponentielle Helligkeitscharakteristik der jeweiligen Anzeigevorrichtung. Somit werden vom Menschen bei unterschiedlichen Farben empfundene Helligkeiten berücksichtigt und insbesondere ausgeglichen. Bei einem linear arbeitenden Anzeigegerät, wie beispielsweise den Anzeigevorrichtungen, muss das Eingangssignal mit dem Gammawert korrigiert werden, um ein lineares Wahrnehmen durch einen Nutzer zu ermöglichen. Ein typischer Gammawert für die Anzeigevorrichtungen ist beispielsweise 2,2.

Erfindungsgemäß wird eine Umgebungstemperatur der jeweiligen Anzeigevorrichtung ermittelt. Ein jeweiliger Temperaturkorrekturwert wird in Abhängigkeit der ermittelten Umgebungstemperatur bereitgestellt. Der jeweilige Temperaturkorrekturwert wird auf dem ermittelten Ausgangswert vor dem Rücktransformieren angewendet. Somit werden auch unterschiedliche Farbdarstellungen ausgeglichen, die aus einem unterschiedlichen Verhalten der jeweiligen Anzeigevorrichtung bei unterschiedlichen Temperaturen resultieren. Somit ist es möglich, eine Farbe auch bei stark unterschiedlichen Temperaturen von bis zu -20° C bis + 40° C stets gleich oder möglichst gleich auf der jeweiligen Anzeigevorrichtung darzustellen.

Gemäß Ausführungsformen wird ein Korrekturwert für eine Schwarzwertkorrektur des RGB-Werts bereitgestellt. Der Korrekturwert wird von dem ermittelten Ausgangswert subtrahiert. Nachfolgend erfolgt das Rücktransformieren in Abhängigkeit von dem Gammawert und das Ermitteln des korrigierten RGB-Werts. Somit ist auch eine verlässliche Anzeige von Schwarz auf der Anzeigevorrichtung möglich, wobei Schwarz im RGB-Farbraum ein sehr dunkles Grau ist.

Gemäß weiteren Ausführungsformen wird ein Blickwinkel auf die Anzeigevorrichtung ermittelt. Ein Blickwinkelkorrekturwert wird in Abhängigkeit von dem ermittelten Blickwinkel bereitgestellt. Der Blickwinkelkorrekturwert wird auf dem ermittelten Ausgangswert vor dem Rücktransformieren angewendet. Somit wird auch eine unterschiedliche Farbwahrnehmung ausgeglichen, die aufgrund von unterschiedlichen Blickwinkeln entsteht. Beispielsweise in einem Kraftfahrzeug wird so berücksichtigt, ob die Anzeigevorrichtung unmittelbar vor dem Fahrer angeordnet ist, sodass ein Blickwinkel von im Wesentlichen 90° vorliegt, oder ob die Anzeigevorrichtung seitlich vom Fahrer angeordnet ist, beispielsweise in der Mittelkonsole, und der Fahrer daher schräg auf die Anzeigevorrichtung blickt. Entsprechend ist auch eine Berücksichtigung des Blickwinkels für andere Nutzer möglich, beispielweise einem Beifahrer.

Erfindungsgemäß wird das Verfahren verwendet, um mindestens eine weitere Anzeigevorrichtung zu betreiben. Das Verfahren ist insbesondere geeignet, zwei Anzeigevorrichtungen oder mehr zu betreiben. Für die weitere Anzeigevorrichtung wird ein weiteres Eingangssignal bereitgestellt, das den mindestens einen RGB-Wert umfasst. Ein weiterer Gammawert der weiteren Anzeigevorrichtung wird bereitgestellt. Eine weitere Abgleichmatrix der weiteren Anzeigevorrichtung wird bereitgestellt. Der RGB-Wert wird in Abhängigkeit von dem weiteren Gammawert normiert. Der weitere normierte RGB-Wert wird mit der weiteren Abgleichmatrix multipliziert und dadurch ein weiterer Ausgangswert ermittelt. Der weitere Ausgangswert wird in Abhängigkeit von dem weiteren Gammawert rücktransformiert und dadurch ein weiterer korrigierter RGB-Wert ermittelt. Ein weiteres Ausgangssignal für die weitere Anzeigevorrichtung wird bereitgestellt, das den weiteren korrigierten RGB-Wert umfasst. Ein dem korrigierten RGB-Wert zugehöriger Farbort der Anzeigevorrichtung und ein dem weiteren korrigierten RGB-Wert zugehöriger weiterer Farbort der weiteren Anzeigevorrichtung sind im Wesentlichen gleich. Insbesondere sind die beiden Farborte gleich oder innerhalb von vorgegebenen Toleranzen sehr ähnlich. Somit ist es möglich, dass die mehreren Anzeigevorrichtungen bei denselben Eingangsdaten den gleichen Farbort darstellen. Beispielsweise wenn Bildinhalte von einer Anzeigevorrichtung zu der weiteren Anzeigevorrichtung geschoben werden, wird somit eine einheitliche Wahrnehmung ermöglicht und störende farbliche Differenzen werden vermieden.

Weitere Merkmale, Vorteile und Weiterbildungen ergeben sich aus den nachfolgenden in Verbindung mit den Figuren erläuterten Beispielen. Gleiche, gleichartige und gleich wirkende Elemente können dabei mit den gleichen Bezugszeichen versehen sein.

Es zeigen:
- Figur 1: eine schematische Darstellung eines Kraftfahrzeugs gemäß Ausführungsformen,
- Figur 2: eine schematische Darstellung eines Verfahrens gemäß Ausführungsformen,
- Figur 3: eine schematische Darstellung eines Flussdiagramms gemäß Ausführungsformen und
- Figuren 4A und 4B: den Vergleich von zwei Anzeigevorrichtungen auf einer Farbtafel gemäß Ausführungsformen.

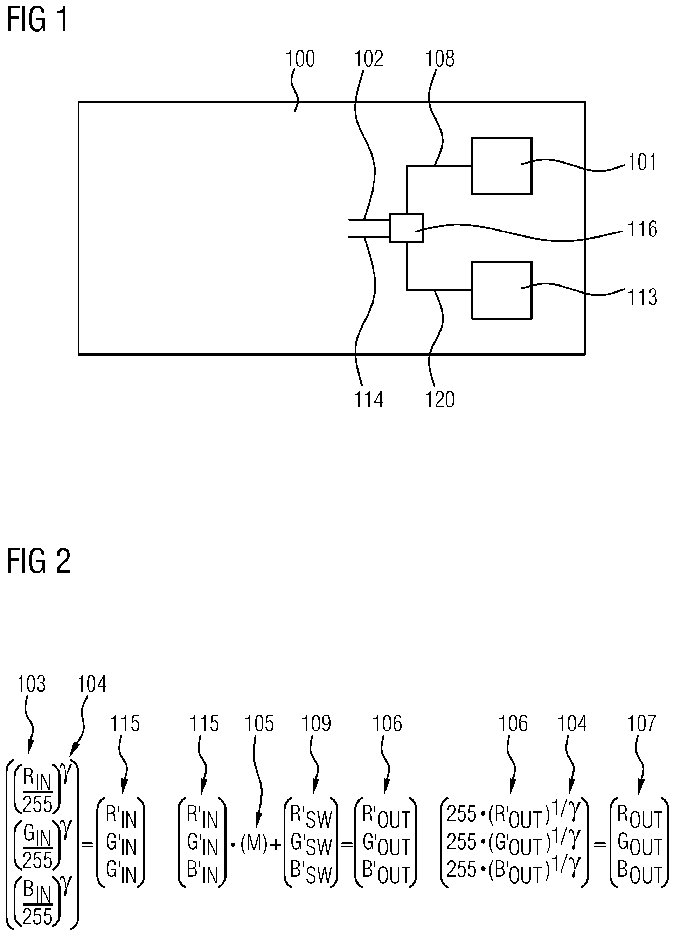

Figur 1 zeigt ein Kraftfahrzeug 100, insbesondere einen Personenkraftwagen. Das Kraftfahrzeug 100 weist zwei Anzeigevorrichtungen 101, 113 auf. Gemäß weiteren Ausführungsformen weist das Kraftfahrzeug 100 mehr als zwei Anzeigevorrichtungen auf. Die Anzeigevorrichtungen basieren gemäß Ausführungsformen auf der gleichen Technologie oder haben gemäß weiteren Ausführungsformen unterschiedliche Technologien, beispielsweise OLED, IPS, MVA, TN oder weitere Technologien. Eine Anordnung 116 ist vorgesehen, die dazu ausgebildet ist, Eingangssignale 102, 114 für die Anzeigevorrichtungen 101, 113 umzuwandeln und Ausgangssignale 108, 120 für die Anzeigevorrichtungen 101, 113 zur Verfügung zu stellen. Mittels der Anordnung 116 ist ein Farbabgleich für die Anzeigevorrichtungen 101, 113 auf einem gemeinsamen Zielfarbraum möglich. Die Eingangssignale 102, 114 werden mittels der Anordnung 116 insbesondere in Echtzeit so angepasst, dass die Anzeigevorrichtungen 101, 113 bei denselben Eingangssignalen 102, 114 die gleichen Farben darstellen. Das Eingangssignal 102 und das Ausgangssignal 108 sind der Anzeigevorrichtung 101 zugeordnet. Das Eingangssignal 114 und das Ausgangssignal 120 sind der Anzeigevorrichtung 113 zugeordnet.

Die Eingangssignale 102 und 118 umfassen jeweils den gleichen RGB-Wert 103 (Figur 2). Der RGB-Wert gibt vor, welche Farbe auf der Anzeigevorrichtung 101 und der Anzeigevorrichtung 113 angezeigt werden soll. Figur 2 zeigt dabei exemplarisch die Umrechnung für die Anzeigevorrichtung 101. Die Umrechnung für die Anzeigevorrichtung 113 erfolgt analog, wobei die der Anzeigevorrichtung 113 zugeordneten Korrekturfaktoren anstelle der der Anzeigevorrichtung 101 zugeordneten Korrekturfaktoren verwendet werden.

Der RGB-Wert 103 des Eingangssignals 102 wird mit einem Gammawert 104 normiert. Das Ergebnis der Normierung mit dem Gammawert 104 ist ein normierter RGB-Wert 115. Der Gammawert 104 ist für die Anzeigevorrichtung 101 vorgegeben und beispielsweise in der Anordnung 116 hinterlegt. Der Gammawert ist beispielsweise von der Technologie der Anzeigevorrichtung 101 abhängig.

Der normierte RGB-Wert 115 wird mit einer Abgleichsmatrix 105 multipliziert. Die Abgleichsmatrix 105 dient insbesondere dazu, die von der Anzeigevorrichtung 101 anzeigbaren Farben auf einen Zielfarbraum umzurechnen. Der Zielfarbraum ist in Abhängigkeit von den beiden Anzeigevorrichtungen 101 und 113 vorgegeben. Der Zielfarbraum ist insbesondere der Farbraum, der von beiden Anzeigevorrichtungen 101 und 113 darstellbar ist. In einer Normtafel nach DIN 5033 lassen sich die von den Anzeigevorrichtungen 101 und 113 darstellbaren Farben durch Dreiecke symbolisieren, die den darstellbaren Farbraum eingrenzen. Liegt beispielsweise das Farbdreieck der Anzeigevorrichtung 101 in dem Farbdreieck der Anzeigevorrichtung 113, wird als Zielfarbraum für beide Anzeigevorrichtungen 101 und 113 der Farbraum der Anzeigevorrichtung 101 gewählt. Überlappen die beiden Farbdreiecke der Anzeigevorrichtungen 101 und 113 nur teilweise und teilweise nicht, wird als Zielfarbraum der Bereich gewählt, in dem die beiden Farbdreiecke überlappen.

Zu dem Produkt aus normierten RGB-Wert 115 und Abgleichsmatrix 105 wird ein Korrekturwert 109 für eine Schwarzwertkorrektur addiert. Dies dient zur möglichst gleichen Darstellung grauer und nahezu schwarzer RGB-Werte auf den Anzeigevorrichtungen 101 und 113. Als Ergebnis wird ein Ausgangswert 106 ermittelt. Unter Berücksichtigung des Gammawerts 104 wird der Ausgangswert 106 wieder zurück in die RGB-Welt transformiert und als korrigierter RGB-Wert 107 an die Anzeigevorrichtung 101 ausgegeben.

Das Verfahren und die einzelnen Rechenschritte erfolgen in der Anordnung 116 insbesondere in Echtzeit.

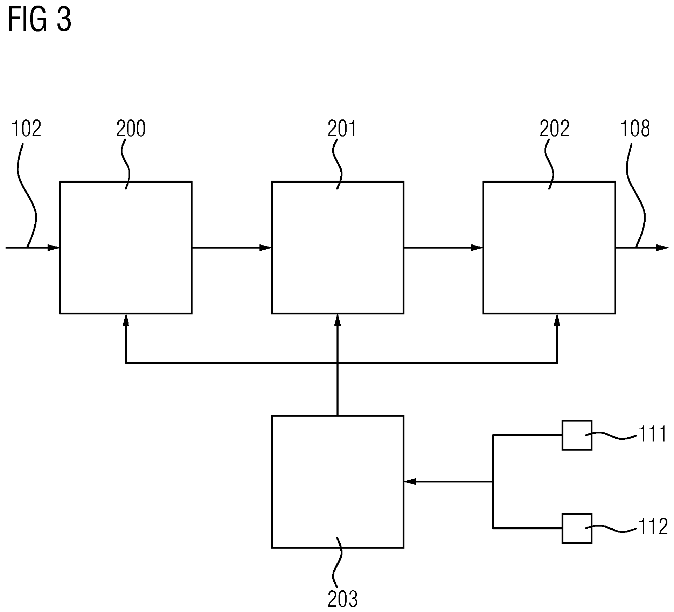

Figur 3 zeigt schematisch ein Flussdiagramm des Verfahrens. Der RGB-Wert 103 des Eingangssignals 102 wird im Schritt 200 unter Berücksichtigung der Gammacharakteristik, insbesondere des Gammawerts 104, der Anzeigevorrichtung 101 für die nachfolgende Berechnung normiert. In Schritt 201 erfolgt die Multiplikation des normierten RGB-Werts 115 mit der Abgleichmatrix 105 und die Addition des Korrekturwerts 109 für die Korrektur des Schwarzfarborts. In Schritt 202 erfolgt das Rücktransformieren des Ausgangswerts 106 auf die entsprechende Farbtiefe der Anzeigevorrichtung 101 unter Berücksichtigung des Gammawerts 104.

Zusätzlich wird gemäß Ausführungsbeispielen vor dem Rücktransformieren in Schritt 203 ein weiterer Korrekturwert oder weitere Korrekturwerte bereitgestellt. Erfindungsgemäß wird ein Temperaturkorrekturwert 111 bereitgestellt. Zusätzlich kann beispielsweise ein Blickwinkelkorrekturwert 112 bereitgestellt werden.

Zum Bereitstellen des Temperaturkorrekturwerts 111 wird eine Umgebungstemperatur an der Anzeigevorrichtung 101 beziehungsweise eine Umgebungstemperatur an der Anzeigevorrichtung 113 ermittelt. In Abhängigkeit der ermittelten Temperatur wird der Temperaturkorrekturwert 111 jeweils für die Anzeigevorrichtung 101 und die Anzeigevorrichtung 113 bereitgestellt. Somit wird der RGB-Wert 103 auch im Hinblick auf ein unterschiedliches Darstellungsverhalten der Anzeigevorrichtungen 101 und 113 bei sich ändernden Umgebungstemperaturen korrigiert. Somit ist gewährleistet, dass unabhängig von der Umgebungstemperatur auf den beiden Anzeigevorrichtungen 101 und 113 bei denselben Eingangssignalen 102 und 114 die gleichen Farben dargestellt werden.

Zum Bereitstellen des Blickwinkelkorrekturwerts 112 wird insbesondere ein Blickwinkel auf die Anzeigevorrichtung ermittelt. Der Blickwinkel wird beispielsweise in Echtzeit ermittelt. Dies erfolgt beispielsweise über Kameras, die im Inneren des Kraftfahrzeugs 100 angeordnet sind, und die auf den Fahrer gerichtet sind. Mittels einer Auswertelogik kann aus dem Videosignal der Kamera der Blickwinkel des Fahrers ermittelt werden. Alternativ wird das System einmalig kalibriert und ein Blickwinkel beispielsweise in der Anordnung 116 hinterlegt. Dabei wird beispielsweise die Einbauposition der Anzeigevorrichtungen 101 und 113 relativ zum Fahrersitz berücksichtigt.

Mittels des Blickwinkelkorrekturwerts 112 wird eine unterschiedliche Wahrnehmung der Anzeige der Anzeigevorrichtungen 101 und 113 in Abhängigkeit des Blickwinkels berücksichtigt. Beispielsweise wirkt eine dargestellte Farbe der Anzeigevorrichtung 113 unterschiedlich, je nachdem, ob ein Betrachter senkrecht auf die Anzeigevorrichtung 113 blickt oder schräg. Im Kraftfahrzeug 100 ist die Anzeigevorrichtung 101 beispielsweise unmittelbar vor dem Fahrer im Kombiinstrument angeordnet. Die Anzeigevorrichtung 113 ist beispielsweise schräg zum Fahrer in der Mittelkonsole angeordnet. Die unterschiedlichen Blickwinkel des Fahrers auf die Anzeigevorrichtungen 101 und 113 werden durch den Blickwinkelkorrekturwert 112 berücksichtigt, sodass die Farben auf den Anzeigevorrichtungen 101 und 113 jeweils so dargestellt werden, dass sie für den Fahrer gleich wirken.

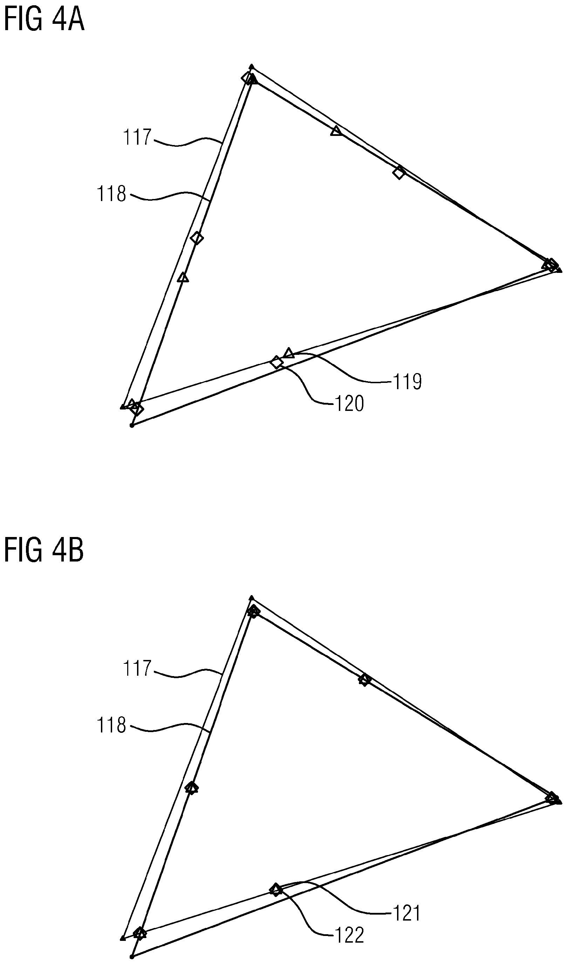

Figur 4A zeigt ein Farbdreieck 117 der Anzeigevorrichtung 101 und ein Farbdreieck 118 der Anzeigevorrichtung 113. Figur 4A zeigt die Darstellung des RGB-Werts 103 ohne das anmeldungsgemäße Korrekturverfahren. Die Darstellung 119 auf der Anzeigevorrichtung 101 und die Darstellung 120 auf der Anzeigevorrichtung 113 weisen eine Abweichung auf, obwohl das gleiche Eingangssignal 102 beziehungsweise 114 mit dem gleichen RGB-Wert 103 vorliegt. Die Darstellungen 119 und 120 weisen insbesondere eine Abweichung voneinander auf, die größer als eine vorgegebene Toleranz ist. Insbesondere erfolgt herkömmlich keine Normierung in Abhängigkeit von dem Gammawert 104.

Figur 4B zeigt eine Darstellung 121 der Anzeigevorrichtung 101 und eine Darstellung 122 der Anzeigevorrichtung 113, nach dem der RGB-Wert 103 mittels des anmeldungsgemäßen Verfahrens bearbeitet wurde. Die Darstellungen 121 und 122 sind gleich beziehungsweise liegen sehr nahe beieinander. Eine Abweichung der Darstellungen 121 und 122 ist insbesondere kleiner als die vorgegebene Toleranz. Bei allen Farben stellt sich nach dem Abgleich mit dem anmeldungsgemäßen Verfahren nahezu der identische Farbort ein. Somit ist ein Farbabgleich der Anzeigevorrichtungen 101 und 113 auf einem gemeinsamen Zielfarbraum möglich. Insbesondere bei der Darstellung von Kombinationen der Grundfarben ist eine sehr geringe Abweichung beziehungsweise das Vermeiden von Abweichungen zwischen den Anzeigevorrichtungen 101 und 113 möglich. Gemäß Ausführungsbeispielen werden mehrere Parametersätze für die Korrekturwerte vorgegeben, insbesondere für verschiedene Blickwinkel des Fahrers, des Beifahrers oder Passagieren im Fond und/oder verschiedene Temperaturen. Somit ist ein verlässlicher Abgleich der farblichen Anmutung der Anzeigevorrichtungen 101 und 113 gegeben.

## Patentansprüche

1. Verfahren zum Betreiben einer Anzeigevorrichtung (101) und einer weiteren Anzeigevorrichtung (113), umfassend:
- Bereitstellen eines Eingangssignals (102), das mindestens einen RGB-Wert (103) umfasst,
- Bereitstellen eines Gammawertes (104) der Anzeigevorrichtung,
- Ermitteln eines Zielfarbraums für die Anzeigevorrichtung (101) in Abhängigkeit vom Farbraum der weiteren Anzeigevorrichtung (113) gemäß
- liegt der Farbraum einer der beiden Anzeigevorrichtungen (101,113)in dem Farbraum der anderen Anzeigevorrichtung (113,101) , so wird als Zielfarbraum der Farbraum gewählt, der in dem anderen Farbraum liegt,
- überlappen die Farbräume der beiden Anzeigevorrichtungen (101,113) nur teilweise und teilweise nicht, so wird als Zielfarbraum der Bereich gewählt, in dem die beiden Farbräume überlappen,
- Bereitstellen einer Abgleichsmatrix (105), die den Farbraum der Anzeigevorrichtung auf den ermittelten Zielfarbraum abbildet,
- Normieren (200) des RGB-Werts (103) in Abhängigkeit von dem Gammawert (104),
- Multiplizieren (201) des normierten RGB-Werts (115) mit der Abgleichsmatrix (105) und dadurch Ermitteln eines Ausgangswertes (106),
- Rücktransformieren (202) des Ausgangswertes (106) in Abhängigkeit von dem Gammawert (104) und dadurch Ermitteln eines korrigierten RGB-Werts (107),
- Bereitstellen eines Ausgangssignals (108) für die Anzeigevorrichtung, das den korrigierten RGB-Wert (107) umfasst,
- Bereitstellen eines weiteren Eingangssignals (114), das mindestens einen RGB-Wert (103) umfasst,
- Bereitstellen eines weiteren Gammawertes (104) der weiteren Anzeigevorrichtung (113),
- Bereitstellen einer Abgleichsmatrix (105), die den Farbraum der weiteren Anzeigevorrichtung (113) auf den ermittelten Zielfarbraum derart abbildet, daß bei identischen RGB-Werten (103) des Eingangssignals (102) und des weiteren Eingangssignals (114) ein dem korrigierten RGB-Wert (107) zugehöriger Farbort der Anzeigvorrichtung (101) und ein dem weiteren korrigierten RGB-Wert (107) zugehöriger weiterer Farbort der weiteren Anzeigevorrichtung (113) gleich sind,
- Normieren (200) des RGB-Werts (103) in Abhängigkeit von dem weiteren Gammawert,
- Multiplizieren (201) des weiteren normierten RGB-Werts (115) mit der weiteren Abgleichsmatrix (105) und dadurch Ermitteln eines weiteren Ausgangswertes (106),
- Rücktransformieren (202) des weiteren Ausgangswertes (106) in Abhängigkeit von dem weiteren Gammawert und dadurch Ermitteln eines weiteren korrigierten RGB-Werts (107),
- Bereitstellen eines weiteren Ausgangssignals (120) für die weitere Anzeigevorrichtung (113), das den weiteren korrigierten RGB-Wert (107) umfasst,
weiterhin umfassend:
- Ermitteln einer Umgebungstemperatur an der Anzeigevorrichtung (101),
- Bereitstellen (203) eines Temperatur-Korrekturwerts (111) für die Anzeigevorrichtung (101) in Abhängigkeit der ermittelten Umgebungstemperatur,
- Anwenden des Temperatur-Korrekturwertes (111) auf den ermittelten Ausgangswert vor dem Rücktransformieren,
- Ermitteln einer Umgebungstemperatur an der weiteren Anzeigevorrichtung (113),
- Bereitstellen (203) eines weiteren Temperatur-Korrekturwerts (111) für die weitere Anzeigevorrichtung (113) in Abhängigkeit der ermittelten Umgebungstemperatur,
- Anwenden des weiteren Temperatur-Korrekturwertes (111) auf den ermittelten weiteren Ausgangswert für die weitere Anzeigevorrichtung (113) vor dem Rücktransformieren.

2. Verfahren nach Anspruch 1, umfassend:
- Bereitstellen eines Korrekturwertes (109) für eine Schwarzwert-Korrektur des RGB-Werts,
- Addieren des Korrekturwertes (109) zu dem Produkt aus normiertem RGB-Wert (115) und Abgleichsmatrix (105) zum Ermitteln eines Ausgangswerts (106) vor dem Rücktransformieren.

3. Verfahren nach einem der Ansprüche 1 bis 2, umfassend:
- Ermitteln eines Blickwinkels auf die Anzeigevorrichtung,
- Bereitstellen eines Blickwinkel-Korrekturwerts (112) in Abhängigkeit von dem ermittelten Blickwinkel,
- Anwenden des Blinkwinkel-Korrekturwertes (112) auf den ermittelten Ausgangswert vor dem Rücktransformieren.

4. Anordnung (116) zum Betreiben zweier Anzeigevorrichtungen (101,113), wobei die Anordnung (116) dazu ausgebildet ist, Eingangssignale (102,114) für die Anzeigevorrichtungen (101,113) gemäß einem Verfahren nach einem der Ansprüche 1 bis 3 in Ausgangssignale (108,120) für die Anzeigevorrichtungen (101,113) umzuwandeln.

5. Kraftfahrzeug, aufweisend:
- eine Anordnung (116) nach Anspruch 4,
- die Anzeigevorrichtungen (101,113).

## Claims

1. Method for operating a display device (101) and a further display device (113), comprising:
- providing an input signal (102) comprising at least one RGB value (103),
- providing a gamma value (104) of the display device,
- determining a target colour space for the display device (101) on the basis of the colour space of the further display device (113), in accordance with the following:
- if the colour space of one of the two display devices (101, 113) is located in the colour space of the other display device (113, 101), then the colour space located in the other colour space is chosen as target colour space,
- if the colour spaces of the two display devices (101, 113) overlap only in part and have a part where they do not overlap, then the region in which the two colour spaces overlap is chosen as the target colour space,
- providing a conversion matrix (105), which maps the colour space of the display device onto the determined target colour space,
- normalizing (200) the RGB value (103) on the basis of the gamma value (104),
- multiplying (201) the normalized RGB value (115) by the conversion matrix (105) and determining an output value (106) as a result,
- performing an inverse transform (202) on the output value (106) on the basis of the gamma value (104) and determining a corrected RGB value (107) as a result,
- providing an output signal (108) comprising the corrected RGB value (107) for the display device,
- providing a further input signal (114) comprising at least one RGB value (103),
- providing a further gamma value (104) of the further display device (113),
- providing a conversion matrix (105) which images the colour space of the further display device (113) onto the determined target colour space such that, in the case of identical RGB values (103) of the input signal (102) and further input signal (114), a colour point of the display device (101) associated with the corrected RGB value (107) and a further colour point of the further display device (113) associated with the further corrected RGB value (107) are the same,
- normalizing (200) the RGB value (103) on the basis of the further gamma value,
- multiplying (201) the further normalized RGB value (115) by the further conversion matrix (105) and determining a further output value (106) as a result,
- performing an inverse transform (202) on the further output value (106) on the basis of the further gamma value and determining a further corrected RGB value (107) as a result,
- providing a further output signal (120) comprising the further corrected RGB value (107) for the further display device (113),
furthermore comprising:
- determining an ambient temperature at the display device (101),
- providing (203) a temperature correction value (111) for the display device (101) on the basis of the determined ambient temperature,
- applying the temperature correction value (111) to the determined output value before the inverse transform is performed,
- determining an ambient temperature at the further display device (113),
- providing (203) a further temperature correction value (111) for the further display device (113) on the basis of the determined ambient temperature,
- applying the further temperature correction value (111) to the determined further output value for the further display device (113) before the inverse transform is performed.

2. Method according to Claim 1, comprising:
- providing a correction value (109) for a black value correction of the RGB value,
- adding the correction value (109) to the product of normalized RGB value (115) and conversion matrix (105) in order to determine an output value (106) before the inverse transform is performed.

3. Method according to any of Claims 1 to 2, comprising:
- determining a viewing angle on the display device,
- providing a viewing angle correction value (112) on the basis of the determined viewing angle,
- applying the viewing angle correction value (112) to the determined output value before the inverse transform is performed.

4. Arrangement (116) for operating two display devices (101, 113), wherein the arrangement (116) is designed to convert input signals (102, 114) for the display devices (101, 113) into output signals (108, 120) for the display devices (101, 113), in accordance with a method according to any of Claims 1 to 3.

5. Motor vehicle, having:
- an arrangement (116) according to Claim 4,
- the display devices (101, 113).

## Revendications

1. Procédé de fonctionnement d'un dispositif d'affichage (101) et d'un autre dispositif d'affichage (113), comprenant :
- fournir un signal d'entrée (102) qui comprend au moins une valeur RVB (103),
- fournir une valeur gamma (104) du dispositif d'affichage,
- déterminer un espace chromatique cible pour le dispositif d'affichage (101) en fonction de l'espace chromatique de l'autre dispositif d'affichage (113) selon ce qui suit :
- si l'espace chromatique de l'un des deux dispositifs d'affichage (101, 113) est situé dans l'espace chromatique de l'autre dispositif d'affichage (113, 101), l'espace chromatique qui est situé dans l'autre espace chromatique est alors choisi comme espace chromatique cible,
- si les espaces chromatiques des deux dispositifs d'affichage (101, 113) ne se recouvrent que partiellement et ne se recouvrent partiellement pas, la zone dans laquelle les deux espaces chromatiques se recouvrent est choisie comme espace chromatique cible,
- fournir une matrice d'égalisation (105) qui effectue une application de l'espace chromatique du dispositif d'affichage sur l'espace chromatique cible déterminé,
- normaliser (200) la valeur RVB (103) en fonction de la valeur gamma (104),
- multiplier (201) la valeur RVB normalisée (115) par la matrice d'égalisation (105) et déterminer ainsi une valeur de sortie (106),
- effectuer une transformation inverse (202) de la valeur de sortie (106) en fonction de la valeur gamma (104) et déterminer ainsi une valeur RVB corrigée (107),
- fournir au dispositif d'affichage un signal de sortie (108) qui comprend la valeur RVB corrigée (107),
- fournir un autre signal d'entrée (114) qui comprend au moins une valeur RVB (103),
- fournir une autre valeur gamma (104) de l'autre dispositif d'affichage (113),
- fournir une matrice d'égalisation (105) qui effectue une application de l'espace chromatique de l'autre dispositif d'affichage (113) sur l'espace chromatique cible déterminé de manière à ce que, lorsque des valeurs RVB (103) du signal d'entrée (102) et d'un autre signal d'entrée (114) sont identiques, un point chromatique, associé à la valeur RVB corrigée (107), du dispositif d'affichage (101) et un autre point chromatique, associé à l'autre valeur RVB corrigée (107), de l'autre dispositif d'affichage (113) soient identiques,
- normaliser (200) la valeur RVB (103) en fonction de l'autre valeur gamma,
- multiplier (201) l'autre valeur RVB normalisée (115) avec l'autre matrice d'égalisation (105) et déterminer ainsi une autre valeur de sortie (106),
- effectuer une transformation inverse (202) de l'autre valeur de sortie (106) en fonction de l'autre valeur gamma et déterminer ainsi une autre valeur RVB corrigée (107),
- fournir à l'autre dispositif d'affichage (113) un autre signal de sortie (120) qui comprend l'autre valeur RVB corrigée (107),
comprenant en outre :
- déterminer une température de l'environnement sur le dispositif d'affichage (101),
- fournir (203) une valeur de correction de température (111) au dispositif d'affichage (101) en fonction de la température déterminée de l'environnement,
- appliquer la valeur de correction de température (111) à la valeur de sortie déterminée avant d'effectuer la transformation inverse,
- déterminer une température de l'environnement sur l'autre dispositif d'affichage (113),
- fournir (203) une autre valeur de correction de température (111) à l'autre dispositif d'affichage (113) en fonction de la température déterminée de l'environnement,
- appliquer l'autre valeur de correction de température (111) à l'autre valeur de sortie déterminée pour l'autre dispositif d'affichage (113) avant d'effectuer la transformation inverse.

2. Procédé selon la revendication 1, comprenant :
- fournir une valeur de correction (109) pour une correction de valeur de noir de la valeur RVB,
- ajouter la valeur de correction (109) au produit de la valeur RVB normalisée (115) et de la matrice d'égalisation (105) afin de déterminer une valeur de sortie (106) avant d'effectuer la transformation inverse.

3. Procédé selon l'une des revendications 1 à 2, comprenant :
- déterminer un angle d'observation sur le dispositif d'affichage,
- fournir une valeur de correction d'angle d'observation (112) en fonction de l'angle d'observation déterminé,
- appliquer la valeur de correction d'angle d'observation (112) à la valeur de sortie déterminée avant d'effectuer la transformation inverse.

4. Ensemble (116) destiné à faire fonctionner deux dispositifs d'affichage (101, 113), l'ensemble (116) étant conçu pour convertir des signaux d'entrée (102, 114) destinés aux dispositifs d'affichage (101, 113) selon un procédé selon l'une des revendications 1 à 3 en signaux de sortie (108, 120) destinés aux dispositifs d'affichage (101, 113).

5. Véhicule automobile, comportant :
- un ensemble (116) selon la revendication 4,
- les dispositifs d'affichage (101, 113).
